# EUROPEAN PATENT APPLICATION

(11) **EP 1 380 977 A1**
(43) Date of publication of application: **14.01.2004**
(21) Application number: 02702874.5
(22) Date of filing: 11.03.2002
(51) Int. Cl.: G06F 17/60

(54) **COMMODITY DEVELOPING METHOD, COMMODITY DEVELOPING SYSTEM, COMMODITY DEVELOPMENT PROGRAM, AND RECORD MEDIUM ON WHICH COMMODITY DEVELOPMENT PROGRAM IS RECORDED**

(30) Priority: 13.03.2001 JP 2001071005
(71) Applicant: SHISEIDO COMPANY LIMITED, Tokyo 104-8010 (JP)
(72) Inventor: HAYASHI, T., c/o SHISEIDO RES CENT.(SHIN-YOKOHAMA), Yokohama-Shi, Kanagawa 224-8558 (JP); FUJIMOTO, Ritsu, Kawasaki-Shi, Kanagawa 213-0014 (JP); NAKAHARA, Seiya, Kawasaki-Shi, Kanagawa 213-0024 (JP); HIRANO, Hirotaka, Urayasu-Shi, Chiba 279-0002 (JP)
(74) Representative: Rees, Alexander Ellison
(86) International application number: PCT/JP2002/002252
(87) International publication number: WO 2002/073487

(57) **Abstract**

A commodity developing method is provided for realizing effective and timely development of a commodity by deciphering a commodity concept using a computer and deciphering latent needs consistency of the commodity. Also, a commodity developing system, a commodity development program, and a recording medium on which the commodity development program is recorded are provided. A commodity concept arbitrarily conceived by an inputter is input to an input template, and a dictionary table is used as a reference to create a work list. After completion of the input process, commodity concepts and other contents of the work list are displayed at the input template, and the commodity concepts are checked to see whether they are appropriate and corrected if necessary. Then a compilation chart is created, and commodity concept category data is analyzed according to a predetermined analysis method. The resulting commodity concept information is output in the form of a diagram or table

## Description

### TECHNICAL FIELD

The present invention relates generally to a commodity developing method, a commodity developing system, a commodity development program and a recording medium on which the commodity development program is recorded, and particularly to a commodity developing method, commodity developing system, and commodity development program for developing a commodity based on commodity concept information gathered and analyzed using a computer.

### BACKGROUND ART

In the field of commodity development, it has been quite a while since makers (producers) have started opting for the so-called needs development concept or market-in concept of reflecting user needs obtained through market research in developing commodity quality rather than the so-called seeds development concept or the product-out concept of developing commodity quality based on the superb technology held by the maker.

In turn, this transition relates to a growing popularity in the so-called pull marketing strategy in which the maker or seller attempts to provide an attractive commodity that can allure a user into voluntarily making a purchase because of the product quality or product image, this strategy replacing the so-called push marketing strategy in which the maker or seller attempts to market a commodity by basically convincing the user of the superiority of its technology, plus a few other added touches.

However, it is not always so easy to obtain good results in commodity sales just by changing from one concept to the other.

That is, although a new-commodity with quality improvement reflecting the results from market research may be recognized by the user as a 'good commodity' , in most cases the appeal factor does not go far enough to the extent of convincing the user into actually buying the commodity. This is where the struggle in commodity development or commodity sales lies.

The reason a new commodity with quality design reflecting the results of market research does not necessarily lead to user purchase may be because results of the market research merely reveal obvious needs of the user with respect to a new commodity. Therefore, although some quality improvements may be made, the new commodity developed based on such market research is unable to give a sense of novelty or surprise to the user. In other words, the user is not amazed by the new commodity. (Product Planning Tools―A Collection of Tools for New Product Development (translation); Kanda, Noriaki; JUSE Press, Ltd.; 1995)

In this regard, an amazement-factor of a new commodity is said to correspond to a multiplication of an originality factor and a latent needs consistency factor.

The originality of the commodity is associated with the product-out method and the push marketing strategy, and this factor depends largely upon the capabilities of the maker such as its commodity development capacity or production technology. On the other hand, the latent needs consistency is associated with the market-in method and pull marketing strategy, and this factor can be enhanced through establishing an accurate market research method.

In most cases, conventional market research is based on surveys conducted by having direct interviews with an examinee, making inquiries using the phone, or sending out questionnaires by mail, for example. Such survey methods have the advantage of being able to accurately excavate even very fine details concerning the image and perception held by the examinee. However, the number of examinees being subjected to the survey, that is, the sampling number may be restricted by the survey cost and possibly by physical factors as well. Thus, the data obtained from the survey may not be sufficient, and also, a long time may be required in analyzing and outputting the results from the acquired data so that a timely reflection of the survey results on the commodity development may not be possible.

### Disclosure of the Invention

The present invention has been conceived in response to the problems of the related art and its object is to provide a commodity developing method, a commodity developing system, and a commodity development program for realizing timely and effective commodity development by grasping a commodity concept using a computer and grasping a latent needs consistency of a commodity. Also, it is another object of the present invention to provide a recording medium on which a commodity development program according to the present invention is recorded.

According to one embodiment, the present invention provides a commodity developing method for conducting commodity development based on commodity concept information that is gathered and analyzed using a computer, the method including:
a commodity concept data input step of defining a plurality of commodity concepts for each of a current product and an ideal commodity and inputting data pertaining to the plurality of commodity concepts;
a commodity concept data compiling step of compiling the commodity concept data input by a plurality of individuals;
a commodity concept weighting step of obtaining a relation between the current product and the ideal commodity for each of the plurality of commodity concepts based on the compiled commodity concept data, and weighting the commodity concepts based on the relation; and
a commodity concept information outputting step of outputting information on the weighted commodity concepts.

Herein, a 'commodity' refers to a category with predetermined characteristics to which a product family belongs, the products of the product family being manufactured by competing companies or a same company. In other words, the term 'commodity' may be perceived as referring to the concept of a product line, a product group, or product items including products that are closely associated with respect to the their similarity, customer range, sales route, or usage, for example. On the other hand, the term 'product' comes under the above-described 'commodity' and is used to refer to the products of a product family that are manufactured by competing companies or a same company. That is, the term may be perceived as referring to the concept of a product type or each of the individual product items belonging to a particular product line, 'for example. Normally, the terms 'commodity' and 'product' are not particularly differentiated, or otherwise, a commodity may be loosely defined as a product that is distributed in the market, as opposed to being in the hands of the producer. However, for convenience's sake, the terms are given the above definitions. in the present application. Also, a 'current product' refers to a product that is actually manufactured and sold, and an 'ideal product' refers to a commodity in an idealistic state of the current product, that is, a commodity provided with the ideal commodity concept.

Also, the commodity concept refers to the significance of the commodity, in other words, the commodity value. The commodity concept includes concepts regarding physical and technical characteristics of the commodity, namely, an object concept corresponding to the significance of a commodity that is designed to realize a physical function (object commodity), and an abstract commodity image held by a commodity user (the inputter of the computer if the user is operating the computer himself/herself, or the customer presenting a commodity concept through an input operator), in other words, a subject concept corresponding to the significance of a commodity designed to realize a characteristic lifestyle (subject commodity). It is noted that the latter commodity image (subject concept) may be realized in place of a physical or technical characteristic of a commodity. That is, the commodity image may actually be used as an aim for commodity development in the way the object concept related to the physical or technical characteristics of the commodity is handled. Thus, the accurate realization of a commodity image (subject concept) demanded by consumers in the commodity may be the key to success in today's commodity development.

Also, a relation between a current product and an ideal product may be a representation of the ratio of or a difference in the number of inputs made for the current product and the number of inputs made for the ideal product with respect to a particular commodity concept, for example. In the case of describing the relation between the current product and the ideal product using the ratio, when a common commodity concept for the current product and the ideal product has a ratio greater than 1, this implies that the commodity concept corresponds to obvious needs of the user that has a low realization rate in the current product. Further, when this ratio is infinite, in other words, when the commodity concept is totally unrecognized by the user as a commodity concept for the current product, this means that this commodity concept corresponds to the latent needs , that is, the commodity concept corresponds to a new concept for the commodity. Based on the relation obtained for a plurality of commodity concepts, the weighting of the commodity concepts may be obtained.

As for the output method of the information, a suitable method such as a screen display method or a print out method may be selected. As for the form of output, a diagram may be selected, or a value portfolio for the commodity may be selected as well. Additionally, by outputting this information from the computer used by the inputter, valuable hints for selecting a commodity may be provided to the inputter (i.e., commodity user or customer).

It is noted that the definitions of the various terms given above are applied throughout the descriptions of the present invention unless noted as otherwise.

The commodity developing method according to the present embodiment uses a so-called definition technique for extracting a valuable commodity concept and conducting commodity development based on this concept.

Thus, according to the present invention, with respect to obvious needs of the user, a commodity concept with a low realization rate in the current commodity may be effectively extracted, and further, a commodity concept representing latent needs of the user may be determined. Such commodity concepts may be used as targets in commodity development or commodity sales and may be reflected in commodity development in the broad sense including quality design or sales strategy of the commodity (synonymous to 'product' in this context) in order to win attracted customers.

In this case, when the commodity concept determined as a target is not present in the current product manufactured by the concerned company, or when this commodity concept is not well-recognized in the current product of this company, emphasis may be put on letting out this commodity concept in new commodity development or product improvement, for example. On the other hand, when the commodity concept determined as the target is prevalent in the hot-selling product of the concerned company, this characteristic may be further strengthened to differentiate the product from other products, for example.

According to a further embodiment, the present invention provides a commodity developing method using a so-called definition method, further including:
a trial product commodity concept data inputting step of defining a plurality of commodity concepts for a trial product. and inputting data pertaining to the plurality of commodity concepts for the trial product;
a trial product commodity concept data compiling step of compiling the trial product commodity concept data input by a plurality of individuals; and
a commodity concept information outputting step of outputting information pertaining to a consistency between information on the plurality of commodity concepts for the trial product that is based on the compiled trial product commodity concept data and the information on the weighted commodity concepts.

Thus, according to the present invention, it may be quantitatively verified whether the commodity concept determined as the target is present in the product to be sold.

Also, according to another embodiment, the present invention provides a commodity developing method including:
a coordinate axis name and current product indicating step of defining and indicating two pairs of opposing commodity concepts represented by respective coordinate axes, which define a coordinate plane and are given coordinate axis names, and indicating a plurality of current products, wherein the opposing commodity concepts of each pair belong to a same category and are respectively assigned to opposing ends of the respective representative coordinate axis;
a coordinate plane data inputting step of inputting a coordinate point in the coordinate plane for each current product according to a recognition level of the commodity concepts;
a coordinate plane data compiling step of compiling the coordinate plane data pertaining to the coordinate points input by a plurality of individuals; and
a commodity concept information outputting step of statistically processing the compiled coordinate plane data and outputting a coordinate plane diagram indicating positions of the plurality of current products based on the statistically processed coordinate plane data.

Herein, a pair of opposing concepts belonging to a same category may, for example, correspond to concepts masculine and feminine that belong to a same category and can be arranged in a pair. Such opposing concepts are respectively set at opposing ends of a coordinate axis; that is, the concepts are arranged at (assigned to) the opposing ends (two quadrants) extending from a center of a coordinate axis, and a coordinate plane axis diagram (map) made up of two coordinate axes implementing two pairs of such opposing concepts is prepared. Then, for each current product, a coordinate point according to a recognition level of the commodity concept in the product is input.

For example, through market research, a hot-selling product may be determined from a plurality of current products, and two commodity concepts for determining the position of the hot-selling product in the two-axis coordinate plane may be determined. Herein, the two commodity concepts may correspond to the effective commodity concepts for realizing a hot-selling product.

The commodity developing method according to the present embodiment uses a so-called positioning method to extract commodity concepts, and conducts commodity development based on the extracted commodity concepts.

Thus, according to the present invention, with respect to obvious needs of the user, commodity concepts that are well-recognized in a hot-selling product may be effectively extracted, and the extracted commodity concepts may be used as targets in commodity development or commodity sales and may be reflected in quality design or sales strategy of the commodity so as to gain the attraction of customers.

The commodity developing method of the present invention using the positioning method may further include a combined information outputting step of combining and indicating positions of information different from the plurality of current products on top of the coordinate plane diagram indicating the positioning of the plurality of current products in the coordinate plane defined by the coordinate axes representing the two pairs of opposing commodity concepts, and outputting the combined information. For example, a plurality of current products may be positioned on a coordinate plane diagram implementing the images (commodity concepts) static/dynamic, and masculine/feminine for the two coordinate axes, and, using same method of acquiring and analyzing data, a plurality of names of celebrities (a set of already known perception information) , for example, may be positioned on the coordinate plane along with the current products. By interpreting the overlapping states of the positions of the current products and the celebrity names, more useful information can be obtained.

Also, according to another embodiment, the present invention provides a commodity developing method including:
a commodity concept and current product indicating step of defining and indicating a plurality of commodity concepts and a plurality of current products;
a commodity concept data inputting step of inputting data pertaining to whether each of the plurality of commodity concepts can be recognized in each of the plurality of current products;
a commodity concept data compiling step of compiling the commodity concept data pertaining to whether each of the plurality of commodity concepts can be recognized input by a plurality of individuals;
a weighting step of analyzing the compiled commodity concept data using a cluster analyzing method and weighting the plurality of commodity concepts for each of the plurality of current products based on the analyzed commodity concept data; and
a commodity concept information outputting step of outputting information on the weighted plurality of commodity concepts for each current product.

The commodity developing method according to the present embodiment uses a so-called Sensitive Differentiation Method (SDM) to extract commodity concepts, and conduct commodity development based on the extracted commodity concepts.

For example, an inputter (commodity user) inputs a commodity concept that he/she uses as a basis for sorting three given commodity concepts and current products into two groups. Further, the inputter inputs an evaluation of whether or not the input commodity concept can be recognized in each of the current products indicated. Then, a plurality of commodity concepts acquired from a plurality of inputters may be analyzed using a cluster analysis method. Consequently, each current product may have a plurality of commodity. concepts , and weighting of the plurality of commodity concepts can be obtained based on the number of inputters inputting each commodity concept for the current product. By grouping the current products according to their main commodity concepts with the largest weight (grouping into a plurality of clusters), a dendrogram made up of a plurality of clusters can be obtained. Through this analyzing method, the commodity concept with a large weight in the weighting of commodity concepts for a hot-selling product may be determined, this information being useful for product development.

Thus, according to the present invention, with respect to the obvious needs of the user, the commodity concept well-recognized in a hot-selling product may be effectively extracted, and the extracted commodity concept may be used as a target in commodity development or commodity sales and reflected in quality design or sales strategy of the commodity so that customers. are attracted to the commodity.

Also, according to another embodiment, the present invention provides a commodity developing method including:
a related commodity concept data inputting step of defining a commodity concept for a subjected commodity, distinguishing said commodity concept into a plurality of commodity concepts in association with directions respectively corresponding to a commodity quality, a commodity intermediate value, and a commodity satisfaction level, and inputting commodity concept data of the plurality of distinguished commodity concepts;
a commodity concept data compiling step of compiling the commodity concept data input by a plurality of individuals;
a commodity concept associating step of analyzing the compiled commodity concept data using a DEMATEL analyzing method, setting the commodity quality and the commodity satisfaction level at opposing ends of an axis, respectively, setting the commodity intermediate value at an intermediate point of the opposing ends of the axis, and developing the commodity concept in conjunction with the set axis; and
a commodity concept information outputting step of outputting information on the associated commodity concept as a commodity concept association diagram.

For example, a user conceives a first commodity concept through free imagination. This commodity concept is usually an intuitive or first hand value for the commodity recognized by the user; in other words, this concept is close to a remark or a first impression of the commodity. Also, a concept related to the commodity quality and conceived based on the first commodity concept is a concept that may be directly linked to quality design. This concept may be conceived by asking a question "why," for example, to extract a cause from a cause-and-effect relation or a higher-level concept in a configurational relation with respect to the first commodity concept. On the other hand, a concept related to the commodity satisfaction level and conceived based on the first commodity concept may correspond to an ultimate value demanded in the commodity by the user. This concept may be conceived by asking a question "so what," for example, to extract a result from a cause-and-effect relation or a higher level concept in a configurational relation with respect to the first commodity concept.

These values develop into higher levels and, thus, obvious values in the commodity as well as unnoticed latent values in the commodity may be deciphered. Also, fundamental demands in quality for a subjected commodity as well ultimate commodity images demanded by the commodity user may be deciphered.

The commodity developing method according to the present embodiment uses a so-called DEMATEL method or sentence completion method to extract commodity concepts, and conduct commodity development based on the extracted commodity concepts.

Thus, according to the present invention, through visualizing the logical structure of the value recognition mind-set of the user, commodity concepts related to commodity quality and commodity satisfaction may be effectively extracted and/or deciphered so that the commodity concepts may be used as targets in commodity development and commodity sales and reflected in quality design and sales strategy of the commodity, leading to acquisition of attracted customers.

Also, according to another embodiment, the present invention provides a commodity developing method including:
a commodity concept data inputting step of defining and inputting a plurality of commodity concepts for a subjected commodity;
a commodity concept data compiling step of compiling commodity concept data input by a plurality of individuals;
a commodity concept weighting step of weighting a plurality of compiled commodity concepts based on respective input counts of the commodity concepts; and
a commodity concept information outputting step of outputting information on the weighted commodity concepts.

Herein, the information obtained from weighting the commodity concepts may be displayed in the form of a histogram, for example, and by interpreting this information, the commodity concept that is to be used as the target may be obtained.

Also, according to another embodiment, the present invention provides a commodity developing method, including:
a commodity concept data inputting step of defining and inputting a plurality of commodity concepts for a subjected commodity;
a commodity concept data compiling step of compiling commodity concept data input by a plurality of individuals; and
a commodity concept information outputting step of positioning words corresponding to the commodity concepts on a plane coordinates diagram based on the compiled commodity concept data and relevancy between the words, and outputting the positioning information as a commodity concept relevancy diagram.

The commodity developing method according to the present embodiment uses an association method such as a so-called KJ method to determine the similarities, relevancies between commodity concepts and position the commodity concepts on a plane coordinates diagram from arbitrary perspectives so that commodity concepts consistent with the latent needs of the user can be determined.

Also, according to another embodiment, the present invention provides a commodity developing method including:
a commodity concept evaluation step of re-setting a commodity concept based on a common ground between commodity concepts determined as the target for commodity development or commodity sales in at least two of the commodity developing methods of the present invention.

Herein, a common ground between commodity concepts refers to a state of the commodity concepts being identical as well as a state of the commodity concepts being similar.

When commodity concepts determined as effective by different commodity developing methods have a common ground, it may be presumed that this common commodity concept is even more effective. On the other hand, when a common ground cannot be found between the commodity concepts determined by different commodity developing methods, the effectiveness of the commodity concepts may be reassessed so as to avoid misinterpretations. Further, when the weighting of the effective commodity concepts differ depending on the commodity developing method used, the effectiveness of the commodity concepts may be determined comprehensively to set a more accurate commodity concept target.

Thus, according to the present invention, by accurately determining an effectiveness commodity concept, this commodity concept may be set as a target for commodity development or commodity sales and reflected in quality design and sales strategy of the commodity so that customers may be attracted to the developed commodity.

Also, according to another embodiment, the present invention provides a commodity developing method including:
a commodity concept data inputting method including an input template rendering step of displaying a plurality of input templates corresponding to a plurality of analyzing methods on a first computer, and an inputting step of selecting a predetermined input template from the plurality of input templates and inputting data pertaining to a plurality of commodity concepts. In this way, a desired analyzing method may be used based on data obtained by a simple inputting method, and the commodity developing methods of the present invention may be realized more effectively.

Also, according to another embodiment, the present invention provides a commodity developing method including:
a commodity concept input data processing method including a commodity concept replacing step of replacing an input commodity concept with a commodity concept category by referring to a dictionary table collating a commodity concept and a commodity concept category having an identical concept and commonality with the commodity concept. In this way, words describing a commodity concept input by different individuals may be standardized upon analysis, and the commodity developing method of the present invention may be realized more effectively.

Herein, a concept category having a same concept and commonality with the commodity concept corresponds to a common and universal commodity concept. This common and universal commodity concept may correspond to a word exactly the same as that.input as the commodity concept, or it may correspond to a superordinate concept that can bring together a plurality of related commodity concepts..

Further, according to another aspect, the present invention provides a commodity developing system for effectively realizing the commodity developing methods of the present invention, the system implementing a first computer for inputting commodity concept data pertaining to a collectivity of commodity concepts, and a second computer for receiving the commodity concept data via a line, analyzing the commodity concept data, and outputting commodity concept information for commodity development, and further including:
input template rendering means for displaying on the first computer a plurality of input templates corresponding to a plurality of analyzing methods; and
input means for selecting a predetermined input template from the plurality of input templates and inputting the commodity concept data.

According to another embodiment, the present invention provides a commodity developing system including:
commodity concept replacing means for replacing an input commodity concept with a commodity concept category by referring. to a dictionary table collating a commodity concept and a commodity concept category having an identical concept and commonality with the commodity concept; and
analyzing means for analyzing data pertaining to the commodity concept category.

Also, according to a further aspect, the present invention provides a program for effectively realizing the commodity developing methods and commodity developing systems of the present invention, the program instructing a computer to perform:
a commodity concept data inputting step of defining a plurality of commodity concepts for each of a current product and an ideal commodity and inputting data pertaining to the plurality of commodity concepts;
a commodity concept data compiling step of compiling the commodity concept data input by a plurality of individuals;
a commodity concept weighting step of obtaining a relation between the current product and the ideal commodity for each of the plurality of commodity concepts based on the compiled commodity concept data, and weighting the commodity concepts based on the relation; and
a commodity concept information outputting step of outputting information on the weighted commodity concepts. The present invention also provides a computer readable recording medium recording the program according to the present embodiment.

According to another embodiment, the present invention provides a program for instructing a computer to perform:
a coordinate axis name and current product indicating step of defining and indicating two pairs of opposing commodity concepts represented by respective coordinate axes, which define a coordinate plane and are given coordinate axis names, and indicating a plurality of current products, wherein the opposing commodity concepts of each pair belong to a same category and are respectively assigned to opposing ends of the respective representative coordinate axis;
a coordinate plane data inputting step of inputting a coordinate point in the coordinate plane for each of the plurality of current products according to a recognition level of the commodity concepts;
a coordinate plane data compiling step of compiling coordinate plane data pertaining to the coordinate points input by a plurality of individuals; and
a commodity concept information outputting step of statistically processing the compiled coordinate plane data and outputting a coordinate plane diagram indicating a positioning of the plurality of current products based on the statistically processed coordinate plane data. The present invention also provides a computer readable recording medium recording the program according to the present embodiment.

According to another embodiment, the present invention provides a program for instructing a computer to perform:
a commodity concept and current product indicating step of defining and indicating a plurality of commodity concepts and a plurality of current products;
a commodity concept data inputting step of inputting data pertaining to whether each of the plurality of commodity concepts can be recognized in each of the current products;
a commodity concept data compiling step of compiling the commodity concept data pertaining to whether each of the plurality of commodity concepts can be recognized input by a plurality of individuals;
a weighting step of analyzing the compiled commodity concept data using a cluster analyzing method and weighting the plurality of commodity concepts for each current product based on the analyzed commodity concept data; and
a commodity concept information outputting step of outputting information on the weighted plurality of commodity concepts for each of the plurality of current products. The present invention also provides a computer readable recording medium recording the program according to the present embodiment.

According to another embodiment, the present invention provides a program for instructing a computer to perform:
a related commodity concept data inputting step of defining a commodity concept for a subjected commodity, distinguishing said commodity concept into a plurality of commodity concepts in association with directions respectively corresponding to a commodity quality, a commodity intermediate value, and a commodity satisfaction level, and inputting commodity concept data of the plurality of distinguished commodity concepts;
a commodity concept data compiling step of compiling the commodity concept data input by a plurality of individuals;
a commodity concept associating step of analyzing the compiled commodity concept data using a DEMATEL analyzing method, setting the commodity quality and the commodity satisfaction level at opposing ends of an axis, respectively, setting the commodity intermediate value at an intermediate point of the opposing ends of the axis, and developing the commodity concept in conjunction with the set axis; and
a commodity concept information outputting step of outputting information on the associated commodity concept as a commodity concept association diagram. The present invention also provides a computer readable recording medium recording the program according to the present invention.

According to another embodiment, the present invention provides a program for instruction a computer to perform:
a commodity concept data inputting step of defining and inputting a plurality of commodity concepts for a subjected commodity;
a commodity concept data compiling step of compiling commodity concept data input by a plurality of individuals;
a commodity concept weighting step of weighting a plurality of compiled commodity concepts based on respective. input counts of the commodity concepts; and
a commodity concept information outputting step of outputting information on the weighted commodity concepts. The present invention also provides a computer readable medium recording the program according to the present embodiment.

According to another embodiment, the present invention provides a program for instructing a computer to perform:
a commodity concept data inputting step of defining and inputting a plurality of commodity concepts for a subjected commodity;
a commodity concept data compiling step of compiling commodity concept data input by a plurality of individuals; and
a commodity concept information outputting step of positioning words corresponding to the commodity concepts on a plane coordinates diagram based on the compiled commodity concept data and relevancy between words, and outputting the positioning information as a commodity concept relevancy diagram. The present invention also provides a computer readable recording medium recording the program according to the present invention.

According to another embodiment, the present invention provides a program for conducting commodity development based on commodity concept information gathered and analyzed, the program instructing a computer to perform:,
an input template rendering- step of displaying on a first computer a plurality of input templates corresponding to a plurality of analyzing methods; and
an inputting step of selecting a predetermined input template from the plurality of input templates and inputting data pertaining to a plurality of commodity concepts. The present invention also provides a computer readable recording medium recording the program according to the present embodiment.

According to another embodiment, the present invention provides a program for conducting commodity development based on commodity concept information gathered and analyzed, the program instructing a computer to perform:
a commodity concept replacing step of replacing an input commodity concept with a commodity concept category by referring to a dictionary table collating a commodity concept and a commodity concept category having an identical concept and commonality with the commodity concept; and
an analyzing step of analyzing data pertaining to the commodity concept category. The present invention also provides a computer readable recording medium recording the program according to the present embodiment.

Further, in the commodity concept developing methods and the commodity developing systems according to the present invention, the commodity concept data input to the computer are preferably obtained from surveys such as face-to-face interviews conducted by a survey crew so that the obtained commodity concept data may be more effective.

### BRIEF DESCRIPTION OF THE DRAWINGS

FIG.1 is a schematic diagram illustrating a commodity developing system according to an embodiment of the present invention;
FIG.2 is a schematic process flowchart illustrating a commodity developing method according to an embodiment of the present invention;
FIG.3 is a flowchart illustrating the usage of a template in the commodity developing method according to a further embodiment of the present invention;
FIG.4 is a flowchart illustrating a commodity concept categorization method used in a commodity concept developing method according to a further embodiment;
FIG. 5 is a flowchart illustrating a commonality analyzing method for commodity concepts used in a commodity developing method according to a further embodiment;
FIG.6 is a flowchart illustrating a common process flow of commodity developing methods according to examples 1, 4 , and 5 corresponding to an embodiment of the present invention;
FIG.7 is a flowchart illustrating a process flow of a commodity developing method according to example 2 of the present embodiment;
FIG. 8 is a flowchart illustrating a process flow of a commodity developing method according to example 3 of the present embodiment;
FIG.9 shows an input template used in the commodity developing method according to example 1 of the present embodiment;
FIG. 10 shows a dictionary table used in the present invention;
FIG. 11 shows a work list used in the commodity concept developing method according to example 1;
FIG.12 shows a compilation list used in the commodity concept developing method according to example 1;
FIG.13 shows a correlation diagram showing a 'current count' and an 'ideal count' for a plurality of commodity concepts obtained in the commodity concept developing method according to example 1;
FIG.14 shows the correlation diagram of FIG.13 in which an 'ideal accomplishment level' for each commodity concept is represented by the size of the diameters of an oval corresponding to the commodity concept;
FIG.15 shows an input template used in the commodity concept developing method according to example 2;
FIG.16 shows a compilation chart used in the commodity concept developing method according to example 2;
FIG.17 shows a scatter chart obtained in the commodity concept developing method according to example 2, the scatter chart indicating the positioning of a plurality of current products;
FIG.18 shows the scatter chart of FIG.17 in which each 'survey product' is represented in the form of a 10% probability oval;
FIG. 19 shows an input template used in the commodity concept developing method according to example 3;
FIG.20 shows level charts used in the commodity concept developing method according to example 3;
FIG.21 shows a cluster analysis result obtained in the commodity concept developing method according to example 3;
FIG.22 shows a dendrogram obtained in the commodity concept developing method according to example 3;
FIG.23 shows a compilation chart obtained in the commodity concept developing method according to example 3, the compilation chart being created by extracting characteristic commodity concepts;
FIG. 24 shows a histogram obtained in the commodity concept developing method according to example 3, the histogram indicating a number value for each 'survey product';
FIG. 25 shows an input template used in the commodity concept developing method according to example 4;
FIG.26 shows a work list used in the commodity concept developing method according to example 4;
FIG.27 shows a cross support matrix obtained in the commodity concept developing method according to example 4;
FIG.28 shows a total influence matrix obtained from the cross support matrix of FIG. 27;
FIG.29 shows a value recognition structure diagram obtained from the total influence matrix of FIG.28;
FIG.30 shows a value recognition structure diagram obtained in the commodity concept developing method according to example 4, the value recognition structure diagram setting a particular word at the center;
FIG.31 shows a compilation chart used in the commodity concept developing method according to example 4;
FIG.32 shows a scatter chart obtained from the compilation chart of FIG.31, the scatter chart indicating a 'cause level' and a 'center level' for each 'category word';
FIG.33 shows an input template used in the commodity concept developing method according to example 5;
FIG.34 shows a compilation chart used in the commodity concept developing method according to example 5;
FIG.35 shows a histogram for the category words obtained in the commodity concept developing method according to example 5; and
FIG.36 shows an orthogonal coordinates diagram obtained in the commodity concept developing method according to example 5, the diagram indicating the positioning of the category words.

### BEST MODE FOR CARRYING OUT THE INVENTION

In the following, preferred embodiments of the present invention (referred to as present embodiment hereinafter) for the commodity developing method, the commodity developing system, the commodity developing program, and the recording medium on which the commodity developing program is recorded will be described with reference to the accompanying drawings.

### (Schematic Configuration of Commodity Developing System)

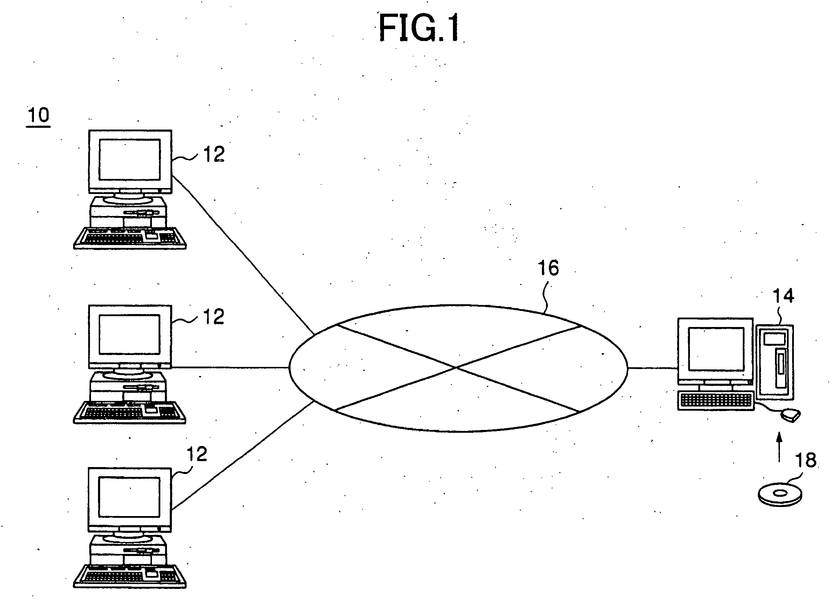

First, referring to FIG. 1, an outline of the commodity developing system according to the present embodiment is described.

The commodity developing system 10 according to the present embodiment includes a plurality of computers (first computer) 12 that inputs commodity concept data, a computer (second computer) 14 that receives and analyzes the commodity concept data, and outputs commodity concept information, and a line network (line) 16 such as a general communication line interconnecting the computers 12 and the computer 14 or an Internet connection line. Herein, the commodity concept information may be output to the computers 12.

The plurality of computers 12 may be stationed at various stores selling the commodity or service stations, for example, and the computer 14 may be stationed at a commodity development department, for example.

In this case, the computers 12 and 14 may be connected via a general or dedicated communication line, or they may be connected via an Internet connection line. Also, a LAN may be used as the communication line between the computers 12 and 14 in which case the computers 12 and 14 have a client-server relation. Alternatively, the computers 12 and 14 may have a so-called terminal-host relation.

Further, a recording medium such as a CD-ROM 18 is provided on which is recorded a commodity development program for developing a commodity based on the commodity concept information gathered and analyzed in the commodity developing system 10. The CD-ROM 18 may be implemented in the computer 14 as shown in FIG. 1, or it may be implemented in the computer 12 as well.

At the computer 12, the commodity concept data may be directly input by a commodity user, or the commodity concept data may be input by a sales attendant at the store that is listening to the commodity concept data from the commodity user. Alternatively, the sales attendant at the store may collectively input the data of a plurality of users based on results from a questionnaire survey.

The input commodity concept data are accumulated and processed in the computer 14 according to a suitable processing method such as a collective processing method or an instant processing method.

The commodity developing system 10 may be used to execute a commodity developing method according to the present embodiment of which specific examples 1~5 will be described below.

### (Common Process Flow of Commodity Development Method according to the Present Embodiment)

In the following, a common process flow for each of the exemplary commodity developing methods according to the present embodiment is described.

### 1) General Process Flow

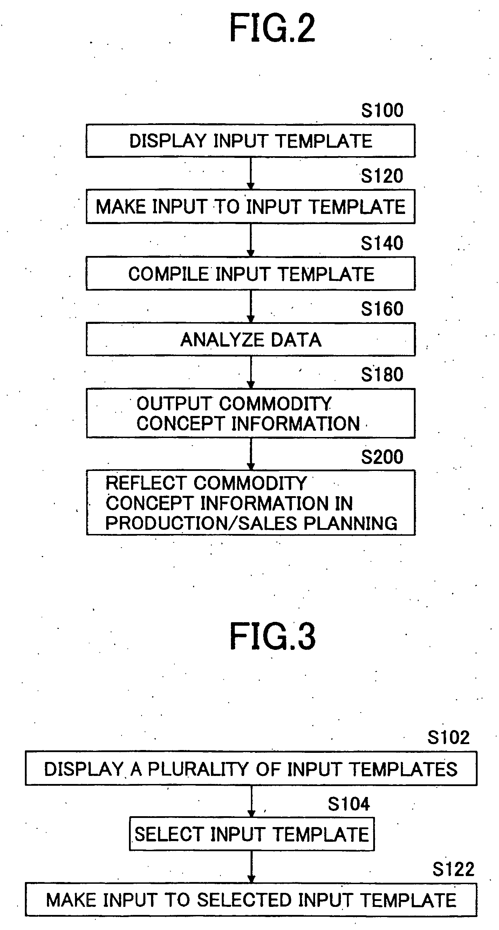

First of all, a general process flow is described with reference to FIG.2. This general process flow is a common process flow for all the exemplary commodity developing methods according to the present embodiment described below.

The process starts with an input template being displayed at the computer 12 (S100) , the input template designating input items and an input method, for example.

Then, commodity concept data is input to the respective item columns of the input template (S120).

Next, the commodity concept data input to a plurality of computers 12 are gathered at the computer 14 via the line network 16, and a compiling process is performed (S140).

Next, the data is analyzed according to a predetermined analyzing method (S160).

Next, based on results from the analysis, commodity concept information is output in a predetermined format according to a predetermined outputting method (S180).

Thus, commodity development can be conducted by reflecting the obtained commodity concept information on the production and sales planning of the commodity (S200).

### 2) Input Flow

In the following, the inputting process (S100 and S120) of FIG.2 concerning the usage of the template are described in greater detail with reference to FIG. 3.

In the inputting process (S100 and S120), a plurality of input templates corresponding to a plurality of predetermined analyzing methods are displayed (S102).

Then, an inputter making the inputs selects an input template (S104). In this case, the computer 14 may administer the computer 12 to select an input template corresponding to the designated analyzing method, or the inputter may select an input template arbitrarily.

Then, the commodity concept data is input to the selected input template (S122).

### 3) Compiling Process Flow (Categorization of Commodity Concept)

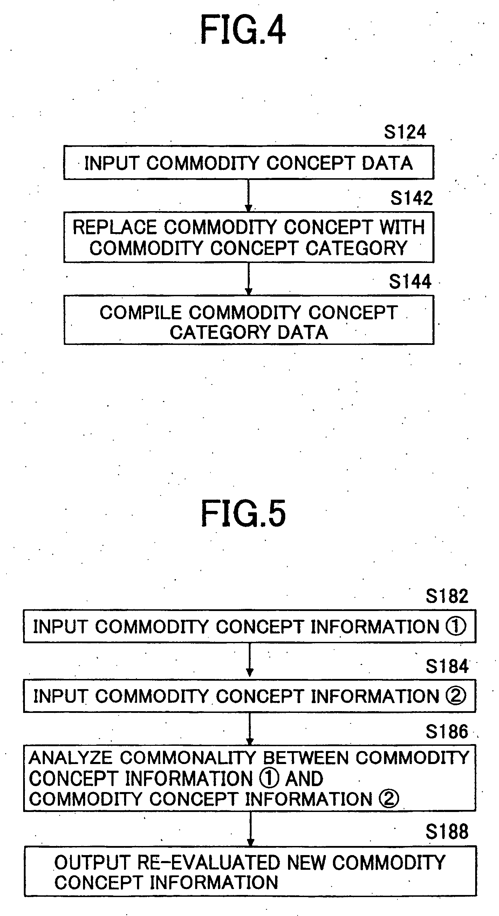

In the following, the compiling process (S120 and S140) of FIG.2 will be described in greater detail with reference to FIG. 4.

When the commodity concept. data is input (S124) , the commodity concept is replaced by a commodity concept category (S142). The commodity concept category refers to a concept that matches and has common ground with a commodity concept. Because of a difference in vocabulary strengths or sensitivity of the inputters, a plurality of commodity concepts described using various words may actually be categorized into one substantial concept. Thus, in order to obtain useful and efficient data, the commodity concepts are processed for standardization. Hence, the commodity concept categorization is performed. Herein, it is noted that the replacement of the commodity concept with the commodity concept category is realized by referring to a dictionary table that compares the commodity concept to the commodity concept category, the details of this process being described later.

Then, based on the replaced commodity concept category data, the compiling process is performed (S144).

### 4) Commodity Concept Information Follow-Up Process (Common Ground Analysis of Commodity Concept)

In the following, a common ground analysis of the commodity concept as a commodity concept information follow-up process will be described with reference to FIG. 5.

Commodity concept information obtained using a predetermined analyzing method (commodity concept information ①) is input to the computer 14 (S182), and commodity concept information obtained using another predetermined analyzing method (commodity concept information ②) is input to the computer 14 (S184).

Then, a common ground between the two sets of commodity concept information is analyzed (S186) , and commodity concept information reevaluated based on the common ground analysis is output (S188). In this way, commodity concept information that is more effective than the individual sets of commodity concept information can be obtained.

### (Individual Process Flow for each Exemplary Commodity Developing Method according to the Present Embodiment)

In the following, process flows of the commodity developing methods according to examples 1~5 of the present embodiment will be described in due order.

### 1) Process Flow of Commodity Developing Methods according to Examples 1, 4, and 5 of the Present Embodiment

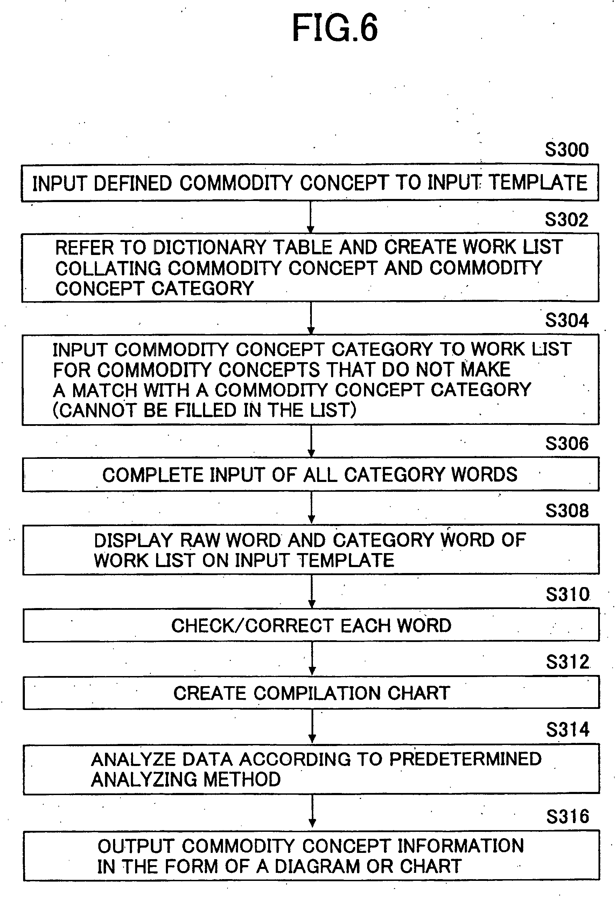

Referring to FIG.6, a common process flow for the commodity developing methods according to the examples 1, 4, and 5 of the present embodiment is described. The commodity developing method according to example 1 uses a so-called definition method; the commodity developing method according to example 4 uses a so-called sentence completion method; and the commodity developing method according to example 5 uses a so-called association method.

First, an inputter inputs a commodity concept conceived through free imagination (defined commodity concept) to the input template of the computer 12 (S300).

Then, referring to a dictionary table comparing the commodity concept to the commodity concept category, a work list arranging a commodity concept with a hit commodity concept category matching the commodity concept is made (S302).

Then, for the commodity concept that does not make a hit (that cannot be put in the list), a commodity concept category is input to the work list (S304).

Then, when the inputting of the commodity concept category to the work list is completed (S306) , the commodity concept and the commodity concept category in the work list are displayed on the input template (S308).

Then, the commodity concept and the commodity concept category are checked to see if they are an appropriate match, and they may be corrected if necessary (S310).

Then, the plurality of sets of input data from a plurality of inputters are compiled, and a compilation chart is made therefrom (S312). This compilation chart may have different formats depending on the different analyzing methods used in the various commodity developing methods. Detailed descriptions of each of the different compilation charts are given later.

Then, the commodity concept category data is analyzed according to the predetermined analyzing method used in the respective commodity developing methods (S314).

Then, the thus obtained commodity concept information is output as a diagram or chart in the respective formats designated by the various predetermined analyzing methods used in the various commodity developing methods (S316).

### 2) Process Flow of Commodity Developing Method according to Example 2 of the Present Embodiment

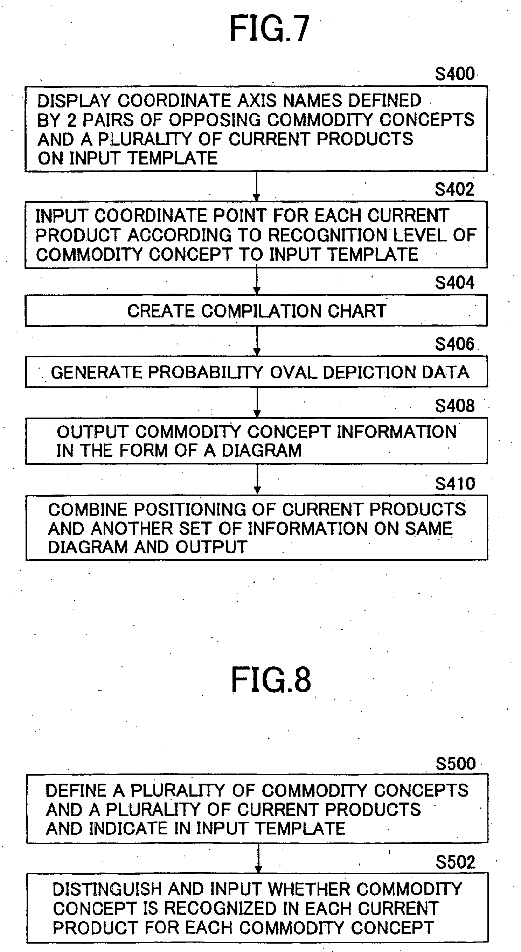

Next, referring to FIG. 7, a process flow of the commodity developing method according to example 2 of the present embodiment is described. The commodity developing method according to example 2 uses a so-called positioning method.

First, coordinate axis names defining two pairs of opposing commodity concepts and a plurality of current products are displayed on the input template (S400).

Then, numerical values of coordinate points according to the recognition level of the commodity concept for each of the current products are input to the input template as coordinate plane data (S402).

Then, plural sets of input data are compiled and a predetermined compilation chart (coordinate plane data compilation chart) is created (S404). The details concerning this compilation chart are described later.

Then, the plural sets of input data are statistically processed to generate probability oval depiction data (S406). The details concerning the probability oval depiction data are described later.

Then, the commodity concept information on the positioning of the current products obtained based on the probability oval depiction data is output in the form of coordinate plane figures (S408). Further, if necessary, information other than that on the current products, for example, a plurality of names of celebrities, obtained in the above manner may be displayed in conjunction with the coordinate plane figures (S410) to interpret the association of the current product with a celebrity.

### 3) Process Flow of Commodity Developing Method according to Example 3 of the Present Embodiment

Next, referring to FIG.8, a process flow of a commodity developing method according to example 3 of the present embodiment is described. The commodity developing method according to example 3 uses a so-called Sensitive Differentiation Method (SDM).

First, a plurality of commodity concepts and a plurality of current products are defined and displayed on the input template (S500).

Then, for each commodity concept displayed on the input template, it is determined whether the commodity concept is recognized in each of the current products, and for example, circles ○ and crosses × are input according to the determination results (S502).

The subsequent procedures of this process flow after step 502 (S502) are identical to steps 302 (S302) through step 316 (S316) shown in FIG.6.

### (Specific Description of Commodity Developing Method according to each Example of the Present Embodiment)

In the following, specific descriptions of the commodity developing method according to the examples 1~5 of the present embodiment are given in due order.

### 1) Commodity Developing Method according to Example 1 of the Present Embodiment

Herein, the commodity developing method according to example 1 of the present embodiment (definition method) is described.

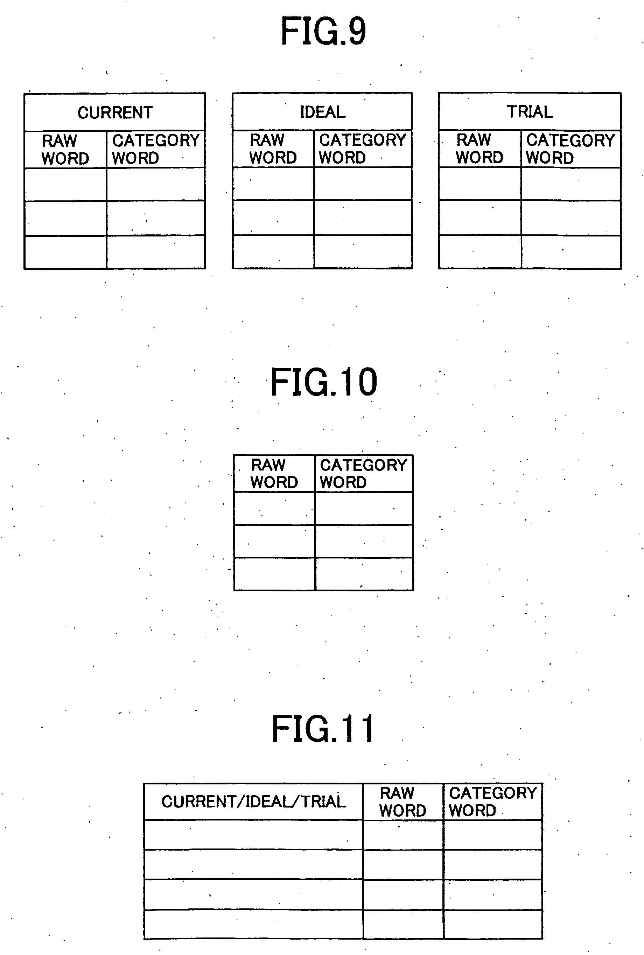

FIG. 9 shows an input template used in the present example. This input template indicates three items labeled 'current', 'ideal' , and 'trial' , respectively. The items correspond to the above-described current product, the ideal product, and a trial product. Also, each item has columns for entering a 'raw word' and a 'category word' , respectively. The former corresponds to the commodity concept, and the latter corresponds to the commodity concept category (corresponding to S100 in FIG.2).

In the commodity developing method according to example 1 of the present embodiment, a commodity being subjected to a survey is specified at the time the execution of the survey of the specified commodity is decided, and for example, a commodity 'shampoo' may be designated. This commodity subjected to the survey may be separately indicated in the input template, or it may be revealed in some other way. The input template shown in FIG.9 is provided for an inputter to freely define commodity concepts for the shampoo he/she is currently using (current product) in his/her own words, and also to define commodity concepts for an ideal shampoo product (ideal commodity) in a similar fashion. Also, if necessary, a plurality of commodity concepts for a trial product are defined and input as well in order to check its consistency with user needs (corresponding to S120 of FIG.2 and S300 of FIG.6). For example, commodity concepts for the shampoo currently being used may be that it has a floral scent and leaves the hair moist, and the commodity concept for the ideal shampoo may be that it has a rich foam and effectively cleanses the hair.

FIG. 10 shows a dictionary table used in the present example. The dictionary table shows a comparison of the 'raw word' to the 'category word'. It is noted that a plurality of dictionary tables may be provided according to the various types of commodities being subjected to commodity development, or a plurality of the tables may be provided according to the various types of analyzing methods. However, in the given examples of the present embodiment, the same dictionary table is used. For example, when a commodity concept is expressed as 'not causing strain on the skin' in the 'raw word', an expression 'low irritant' may be referred to in the dictionary table.

FIG. 11 shows a work list used in the present example. The work list shows the 'category word' corresponding to the 'raw word' input for each of the three items, 'current', 'ideal', and 'trial' in the form of a list. The format of the work list differs depending on the various examples of the present embodiment.

After the input to the input template is completed for the input items, a predetermined dictionary table is designated, and categorization is instructed so that the 'raw words' input for the three items 'current', 'ideal', and 'trial', respectively, are copied and 'category words' making a hit with the respective 'raw words' are filled into the work list (corresponding to S302 of FIG. 6). Also, the inputter may be able to correct a 'raw word' in the work list.

After the inputting of the 'category words' to the work list is completed, a 'completion' process is performed so that the 'raw words' and the 'category words' of the work list are put back into the columns of the original input template (corresponding to S308 of FIG. 6).

Then, the inputter checks the 'raw words' and the 'category words' in the input template to see if the juxtapositions are appropriate, and makes corrections if necessary (corresponding to S310 of FIG.6). Then, if there is no problem, a 'compilation' process is instructed.

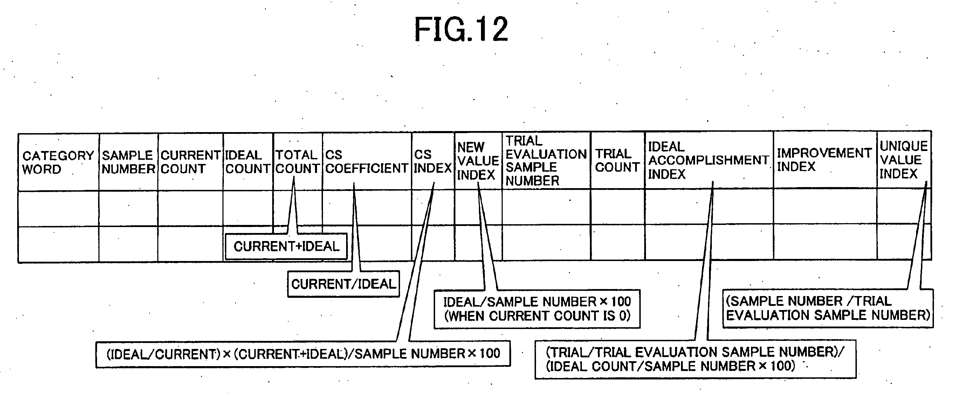

FIG.12 shows a compilation chart used in the present example. The compilation chart includes an item 'category word' as well as the following items.

'Sample number' refers to the number of inputs made by the plurality of inputters (total number of inputters). 'Current count' refers to the number of inputs of the 'category word' for the item 'current' out of the 'sample number'; and 'ideal count' refers to the number of inputs of the 'category number' for the item 'ideal' out of the 'sample number'. 'Total count' refers to the total of the 'current count' and the 'ideal count'. Herein, the 'category word' with a large 'current count' is a representation of a commodity image or perception that the commodity user generally has towards the current product; in other words, this 'category word' may be perceived as representing an existent commodity concept. On the other hand, the 'category word' with a large 'ideal count' is a representation of a commodity image or perception that the commodity user has towards the ideal product; in other words, this 'category word' may be perceived as representing a latent commodity concept.

'CS coefficient' refers to the value obtained by dividing the 'ideal count' by the 'current count'. This 'CS coefficient' corresponds to a customer satisfaction coefficient, that is, a weighting coefficient for the plurality of commodity concepts ('category words' in this example) from the aspect of the above-described nature of commodity concepts.

'CS index' refers to the value obtained by multiplying the 'CS coefficient' by the total value of the 'ideal count' and 'current count', dividing the multiplication result by 1/2 the 'sample number', and expressing this division result in the form of a percentage value. This 'CS index' may be perceived as an attempt at generalizing the weighting of a commodity concept out of the plurality of commodity concepts.

'New value index' is a 'CS index' of which the 'category word' has a 'current count' that is equal to zero. Thus, the 'category word' with a large 'new value index' is a representation of a commodity concept that does not exist in the current commodity and merely exists as an ideally desired commodity concept; in other words, this may be considered an ultimate value.

'Trial evaluation sample number' refers to the number of inputs made by a plurality of inputters (the total number of inputters) that have answered questionnaires after actually using the trial product. 'Trial count' corresponds to the number of inputs of the 'category word' for the item 'trial' out of the 'sample number'.

'Ideal accomplishment index' corresponds to a value obtained by dividing the 'trial count' by the 'trial evaluation sample number' , dividing the 'ideal count' by the 'sample number' , further dividing the former division result by the latter division result, and expressing the obtained result in the form of a percentage value. This 'ideal accomplishment index' may be likened to an indicator indicating how far the trial product is able to satisfy the commodity concept ultimately sought after by the commodity user.

'Improvement index' corresponds to the value obtained by dividing the 'sample number' by the 'trial evaluation sample number', dividing the 'current count' by the 'sample number', further dividing the former division result by the latter division result, and expressing the obtained result in the form of a percentage value. This 'improvement index' may be considered an indicator indicating the extent of improvement in the trial product with respect to the current commodity.

'Unique value index' corresponds to the value obtained by dividing the 'trial count' by the 'trial evaluation sample number' and expressing the obtained result in the form of a percentage value.. This 'unique value index' represents a new found value in the trial product that is recognized by the commodity user upon using the trial product for the commodity concept with both the 'current count' and 'ideal count' equaling. zero.

By instructing a 'compiling' process, the compilation chart of FIG. 12 is made (corresponding to S140 of FIG.2 and S312 of FIG.6). In this case, the compiling procedure actually includes the analyzing procedure (S160 of FIG. 2 and S314 of FIG. 6).

Based on the compilation chart, significant information concerning the commodity concept can be output in various forms (S180 of FIG.2 and S316 of FIG. 6)

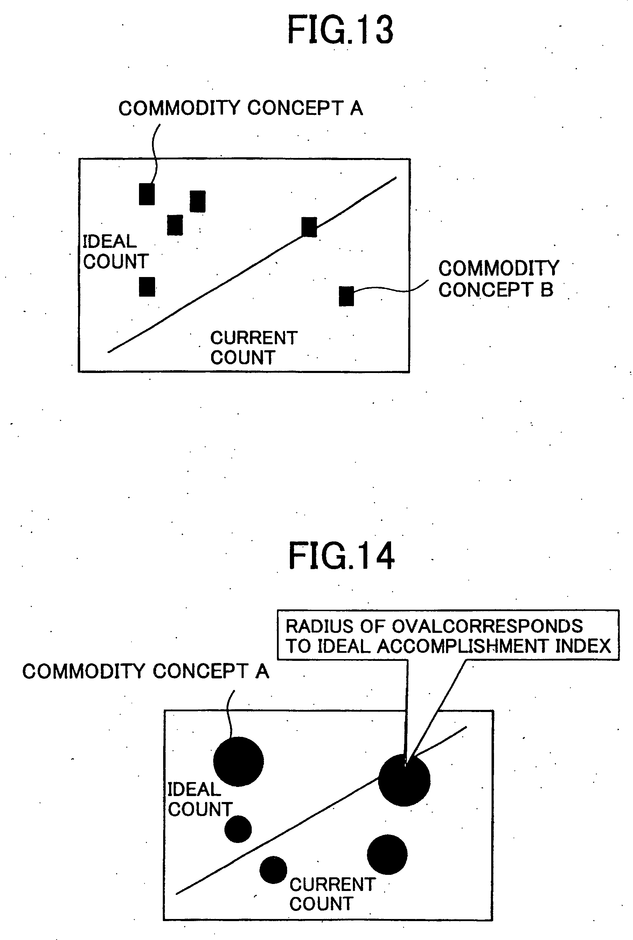

For example, FIG. 13 is an example of a correlation diagram representing a relation between the 'current count' and the 'ideal count' for the plurality of commodity concepts ('commodity concept category' in this example) obtained. This correlation diagram may be obtained by pressing a 'value portfolio (count)' button or a 'value portfolio (percentage)' button.

As is evident from the above descriptions, in FIG. 13, commodity concept A has a character of being a latent new value, and commodity concept B has a character of being an obvious value that is regarded as effective. Thus, an effective commodity development is possible by developing a new commodity that can realize commodity concept A or commodity concept B, for example.

Also, FIG. 14 is an example of a diagram indicating ovals having various diameters (radii) according to the scale of the 'ideal accomplishment index' for each of the commodity concepts shown in FIG. 13. According to this drawing, it can be determined that the commodity concept A, which corresponds to the new value, is significantly supplemented in the trial product.

It is noted that for each item of the compilation chart, the order of the commodity concept may be rearranged according their respective values; in other words, the compilation chart may be output as a value chart for considering the effectiveness of the commodity concepts from various aspects.

### 2) Commodity Developing Method according to Example 2 of the Present Embodiment

In the following, the commodity developing method according to example 2 of the present embodiment (positioning method) will be described.

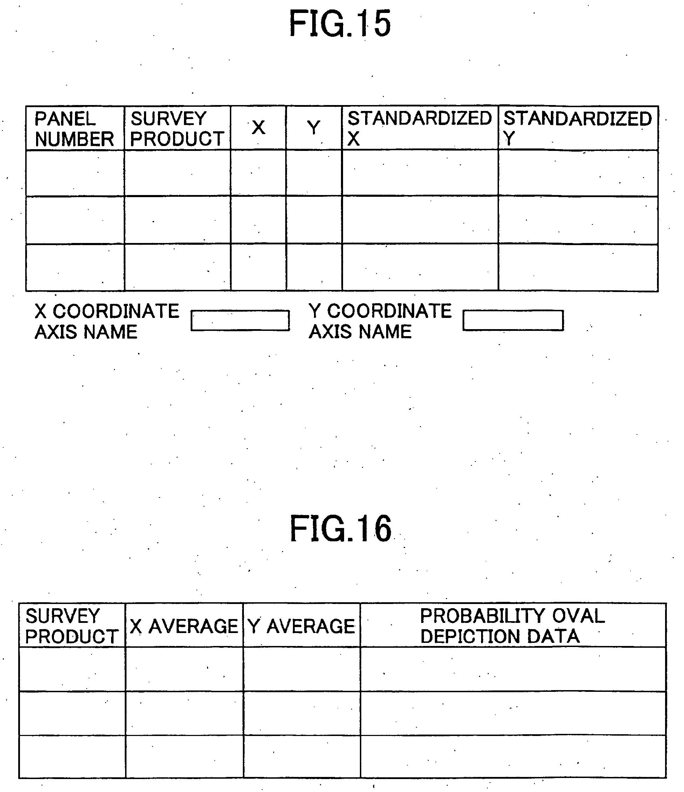

FIG.15 shows an example of an input template used in the present example. This input template includes 'panel number' for distinguishing inputters, 'survey product' indicating the plurality of current products (current-product names) being subjected to the survey, 'X' representing the coordinate point for an X coordinate axis name described below, and 'Y' representing the coordinate point for a Y coordinate axis name described below, as items (S100 of FIG.2 and S400 of FIG.7). The 'X coordinate axis name' and the 'Y coordinate axis name' are each defined as a pair of opposing commodity concepts that belong to the same category. For example, a name 'static/dynamic' may be assigned as the 'X coordinate axis name', and a name 'masculine/feminine' may be assigned as the 'Y coordinate axis name'.

In the commodity developing method according to example 2 of the present embodiment, a plurality of commodities subjected to the survey are specified in the item 'survey product' of the input template of FIG.15. Then, for each 'survey product', coordinate points 'X' and 'Y' are input by the inputter according to his/her evaluation of where the coordinate points are positioned on the respective coordinate axes with respect to the commodity concepts corresponding to the 'X coordinate axis name' and the 'Y coordinate axis name' based on the sense or image of the product held by the inputter (S120 in FIG.2, S402 in FIG.7). After completing the entering of inputs for the 'survey products', the input coordinate points 'X' and 'Y' may be corrected if necessary in consideration of the relative balance between each of the 'survey products'.

Then, the input data (coordinate plane data) made by a plurality of inputters are compiled and the compilation chart shown in FIG.16 is made. Herein, it is noted that this compilation may also be used as an analysis chart (S140 and S160 in FIG.2; S404 and S406 in FIG. 7)

The compilation chart includes the 'survey product' as well as 'X average', 'Y average' , and 'probability oval depiction data' as items.

Herein, 'X average' and 'Y average' correspond to average values obtained from standardized values of 'X' and 'Y' ('standardized X' and 'standardized Y' in FIG.15), respectively.

Next, 'probability oval depiction data' of the compilation chart is generated according to the following procedures.

First, for each 'survey product' , the slope of a regression line is obtained. Then, each set of coordinates are rotated according to the slope with an average (X, Y) as a center. Then, standard deviations in the X direction and Y direction are obtained. Then, values of an inverse function of the standard normal distribution with respect to a probability P is obtained, and the diameters of the oval in the X direction and the Y direction are set.

Based on the compilation chart, useful information relating to the commodity concept may be output in various forms (S180 in FIG.2; S408 in FIG.7).

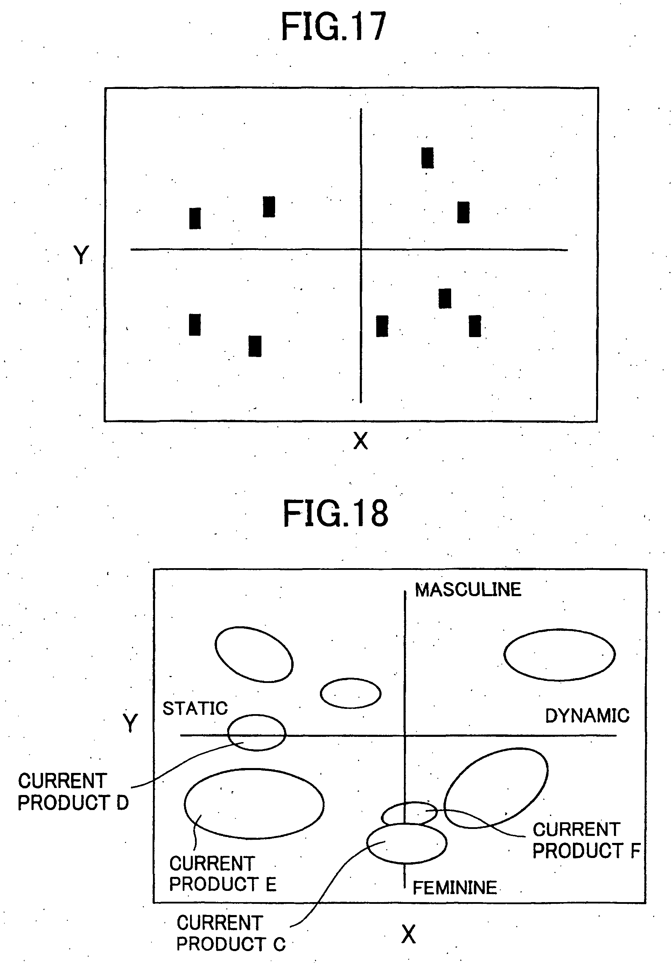

For example, FIG.17 represents information on the positioning of the plurality of current products in the form of a scatter diagram. Also, in FIG.18, a 10% probability oval is shown for each 'survey product' represented in FIG.17.

In FIG.18, for example, if current products C and D correspond to products made by the company conducting this survey and current products E and F correspond to products made by other companies, and if the current product C corresponds to a hot-selling commodity (product), a feminine image may be considered a target commodity concept for developing further product items since the current product C corresponding to the hot-selling commodity has a feminine image as its commodity concept.

Further, with regard to the commodity concept of a feminine image, the current product C is competing with the current product F made by another company. Also, with respect to the commodity concept of a static image, the current product D is competing with the current product E made by another company. Such information is useful in commodity development.

Additionally, after obtaining the above compilation chart, another different compilation chart featuring the names of a plurality of female celebrities, for example, may be created according to similar procedures. Then, the data of the two compilation charts may be combined and represented in a scatter chart (not shown, S410 in FIG. 7).

In such scatter chart, the state of the current product in association with celebrity names may be analyzed, thereby further providing useful information for commodity development.

### 3) Commodity Developing Method according to Example 3 of the Present Embodiment

In the following, the commodity developing method according to example 3 of the present embodiment (SDM: Sensitive Differentiation Method) will be described.

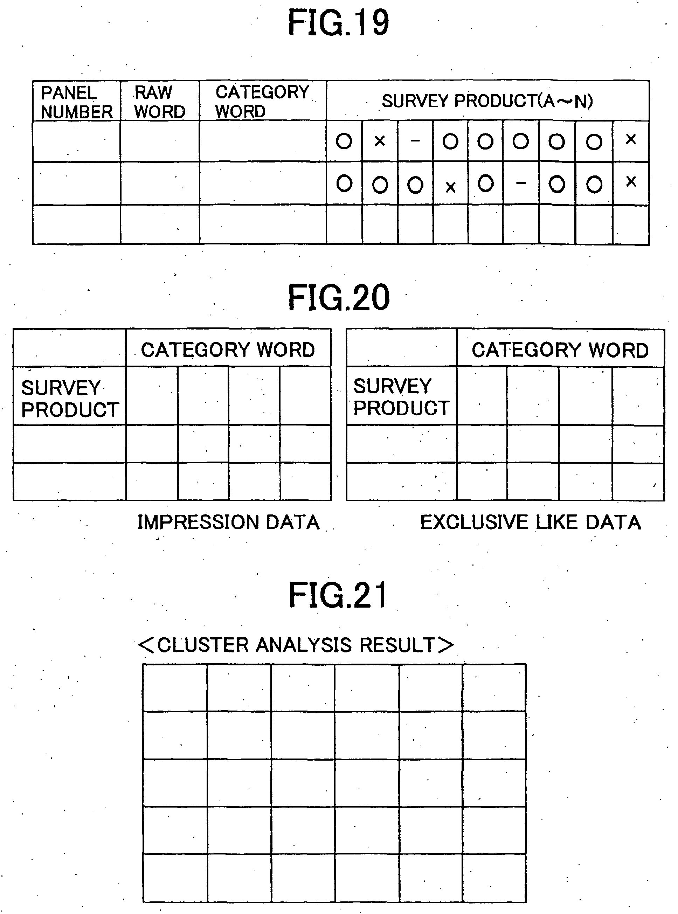

In FIG. 19, an input template used in this example is shown. This input template includes the items 'panel number' , 'raw word' , 'category word' , and 'survey product (A~N)'. The item 'survey products (A~N)' contains evaluations for a plurality of survey products (S100 in FIG.2, S500 in FIG. 8).

In the commodity developing method according to example 3 of the present embodiment, first, the plurality of current product names as surveyed commodities are indicated in the item 'survey products (A~N)'.

Then, for each 'raw word' or 'category word', it is determined by the inputter whether the respective current products (current product names) hold the image described by the 'raw word' (or 'category word'). Namely, a circle '○' is input for the current products that hold the image described by the 'raw word', and a cross '×' is input for the current products that do not hold the image described by the 'raw word' (S120 in FIG.2; S502 in FIG. 8).

The subsequent processing procedures performed in this example are identical to those performed in step 140 (S140) and the subsequent steps of FIG. 2.

Then, level charts as shown in FIG.20 are made as compilation charts.

In FIG.20, two level charts are formed; one being an impression data level chart that disregards the 'like/dislike' factor (i.e., like level + dislike level), the other being an exclusive like data level chart that focuses on the 'like' factor (i.e., like level - dislike level).

In each level chart, the number of inputs made for each 'category word' is shown for each 'survey product'.

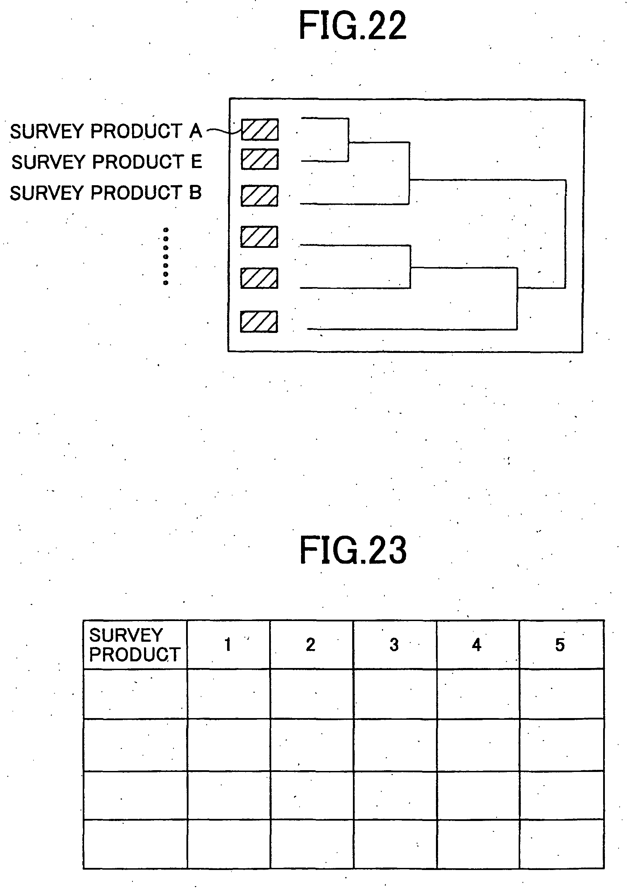

Based on the level charts, a cluster analysis result as shown in FIG.21 is obtained, and further, a dendrogram as shown in FIG.22 is obtained from the cluster analysis result.

In FIGS. 21 and 22, the survey products are divided into a plurality of clusters based on differences in their main commodity concepts, and in each cluster for a particular commodity concept, current products that are distinguished from other current products by this commodity concept are assigned.

The current products may have a plurality of commodity concepts including the main commodity concept. FIG. 21 shows a weighting of the commodity concepts based on the input count of each commodity concept, and in this way, the main commodity concept may be determined. Then, by categorizing the current products according to their main commodity concepts that take up a large weight in the weighting, the dendogram (tree map) of FIG.22 made up of a plurality of clusters may be obtained.

Through this analysis method, it may be determined that the commodity concept with a large weight in the weighting of the commodity concepts recognized in the hot-selling commodity is a valuable concept for the commodity development.

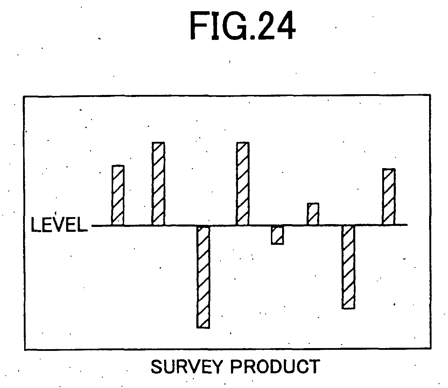

Further, as shown in FIG. 23, five characteristic commodity concepts (commodity concept categories), for example, for each survey product may be extracted to form a compilation chart, and a histogram indicating a level for each 'survey product' as shown in FIG.24 may be generated based on the compilation chart. In this way, the commodity concepts may be regarded from a perspective that is different from a perspective of the dendrogram so that further useful information may be obtained for commodity development.

### 4) Commodity Developing Method according to Example 4 of the Present Embodiment

In the following, the commodity developing method according to example 4 of the present embodiment (sentence completion method or DEMATEL analysis method) will be described.

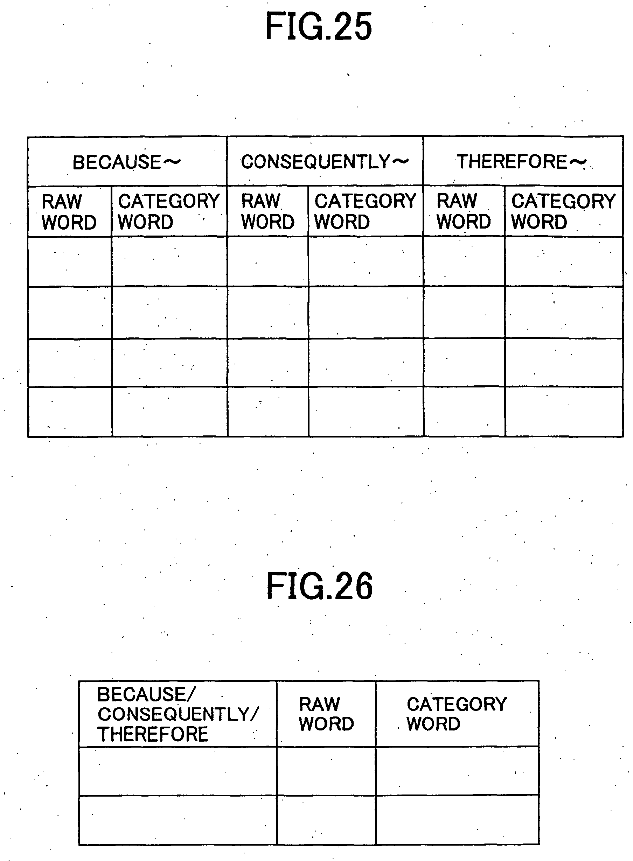

FIG.25 shows an input template used in the present example. This input template includes columns for inputting a 'raw word' and a 'category word' for each of the items 'because ~', 'consequently ~', and 'therefore ~' (S100 in FIG. 2).

In the commodity developing method according to example 4 of the present embodiment, first, the surveyed commodities are specified (not shown in the input template). Then, words are input to each of the columns corresponding to the items for logically completing a sentence including a fact, a remark, and a conclusion, namely, a sentence, 'Because ~, consequently ~, and therefore ~,' describing a commodity concept for each of the surveyed commodities (S120 in FIG.2; S300 in FIG.6). For example, 'my shampoo' as a surveyed commodity may be described by inputting a commodity concept ('raw word' or 'category word' ) , 'because it foams up easily,' 'consequently it leaves the hair moist,' and 'therefore it facilitates hair styling'.

After inputting the commodity concept, the processes corresponding to step 302 (S302) of FIG.6 and the subsequent steps are performed according to procedures identical to those for example 1 of the present embodiment.

However, in this case, the work list conforms to a format shown in FIG. 26.

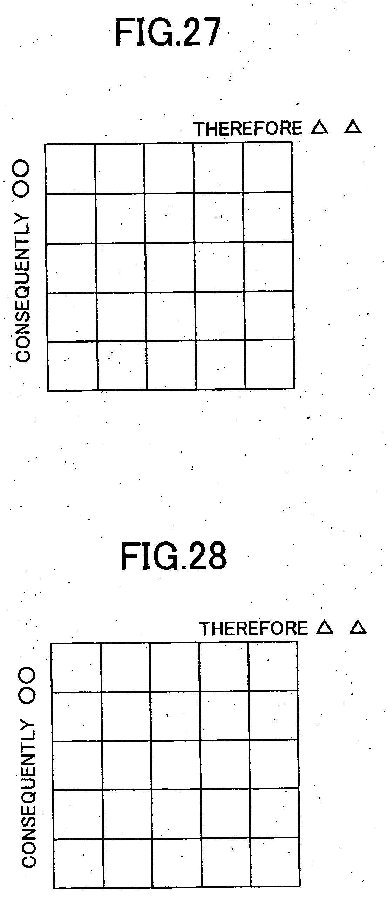

DEMATEL analysis starts with the formation of a square matrix shown in FIG.27 for variable × variable called a cross support matrix. The square matrix for the variables is different from a correlation coefficient matrix in that it is an asymmetrical matrix. Thereby, it is possible to assign directional meaning to each numerical value in each cell, and an analysis of an influential power relation, a cause-and-effect relation, or an order relation moving from column to row may be possible.

In DEMATEL analysis, the influential power of the path generated when the cross support matrix is squared, cubed, and so on, is mass computed by multiplying the cross support matrix by its inverse matrix to obtain an indirect influence matrix, and adding this to the direct influence matrix to obtain a total influence matrix as shown in FIG. 28.

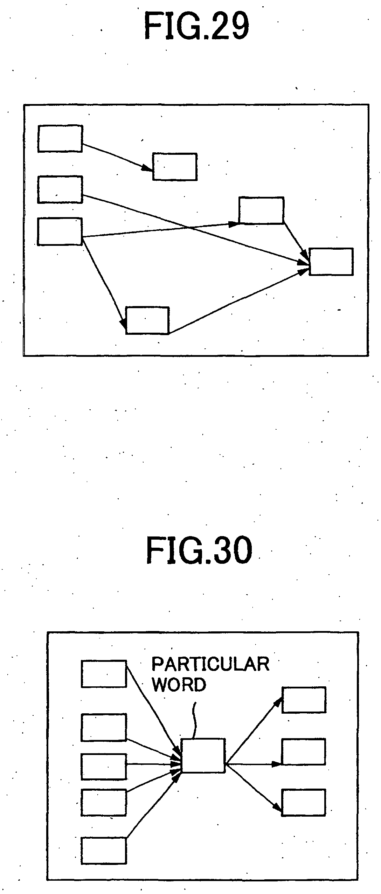

Based on the total influence matrix, a value recognition structure diagram (commodity concept relation chart) as shown in FIG.29 may be obtained.

In the value recognition structure diagram, first hand values corresponding to the remarked words are connected to fact words corresponding to the commodity quality and conclusion words corresponding to the commodity satisfaction level.

In this way, an understanding of the logic in the value recognition of commodity users may be facilitated, and hidden or latent values or needs may be discovered by moving further to the right in FIG.29.

Herein, by designating a particular word, a value recognition structure diagram centering on the particular word may be obtained as shown in FIG. 30.

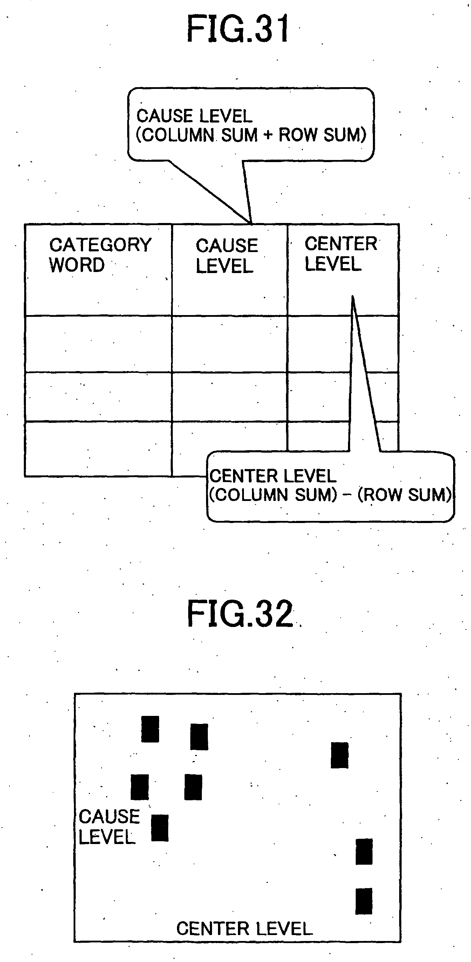

Also, a compilation chart as shown in FIG. 31 may be made, this chart including the items 'cause level' corresponding to the total sum of the column sum and the row sum, and 'center level' corresponding to the difference between the column sum and the row sum for each 'category word'. Based on this compilation chart, a scatter chart shown in FIG.32 may be obtained. From this scatter chart, information on which word corresponds to the cause of a particular value recognition and leads to which word, or which word is frequently used can be obtained.

### 5) Commodity Developing Method according to Example 5 of the Present Embodiment

In the following, the commodity developing method according to example 5 of the present embodiment (association method) will be described.

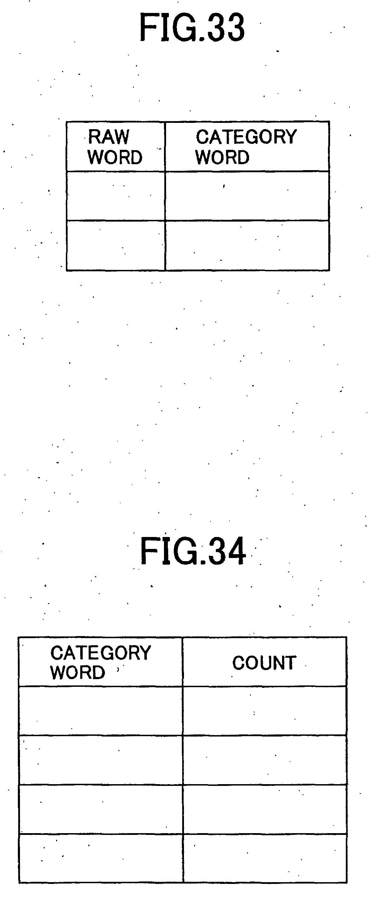

FIG. 33 shows an input template used in the present example. This template includes columns for inputting a 'raw word' and 'category word' for a surveyed product, which is not shown (S100 in FIG. 2).

In the commodity concept developing method according to example 5 of the present embodiment, first, a surveyed product is designated in advance, and a plurality of commodity concepts are defined freely and input. The subsequent process steps for this method are identical to the process steps S302 and onward of FIG.6 showing the commodity developing method according to example 1 of the present embodiment.

In the commodity concept developing method according to example 5 of the present embodiment, a compilation chart as shown in FIG.34 is obtained.

This compilation chart includes an item 'count' corresponding to the number of inputs made for each 'category word'.

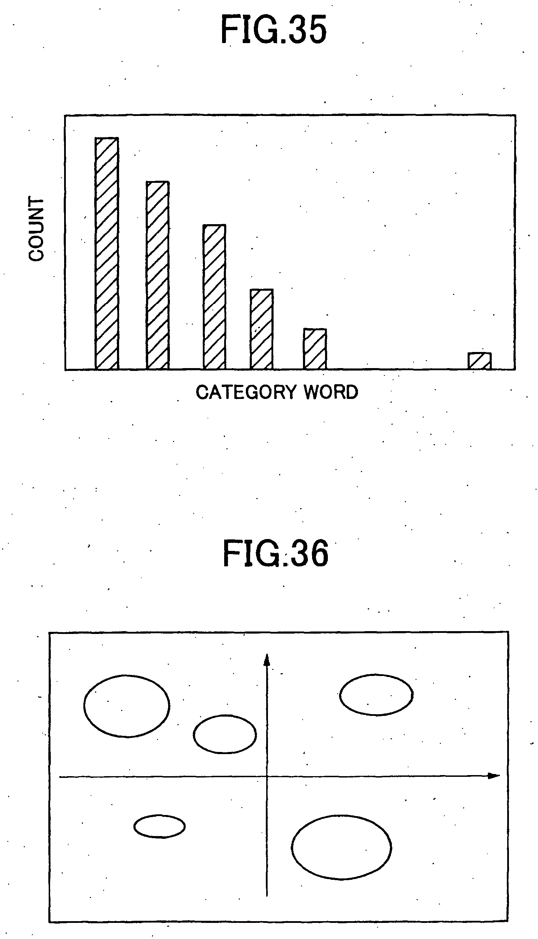

Based on this compilation chart, a histogram as shown in FIG.35 may be obtained. From this histogram, an image held by the commodity user for a surveyed product can be easily determined, and a key commodity concept being for commodity development may be obtained.

Also, as shown in FIG. 36, ovals with radii based on the standardized values of inputs in the item 'count' for each 'category word' may be positioned in a graph having orthogonal coordinate axes. The positions of the ovals representing the 'category words' (commodity concepts) may be rearranged freely according to similarities and relevancies between the commodity concepts, for example, so as to look at the commodity concepts from all different aspects. In this way, a commodity concept corresponding to latent needs can be determined.

## Claims

1. A commodity developing method for conducting commodity development based on commodity concept information that is gathered and analyzed using a computer, the method comprising:
a commodity concept data inputting step of defining a plurality of commodity concepts for each of a current product and an ideal commodity and inputting data pertaining to the plurality of commodity concepts;
a commodity concept data compiling step of compiling the commodity concept data input by a plurality of individuals;
a commodity concept weighting step of obtaining a relation between the current product and the ideal commodity for each of the plurality of commodity concepts based on the compiled commodity concept data, and weighting the commodity concepts based on the relation; and
a commodity concept information outputting step of outputting information on the weighted commodity concepts.

2. The commodity developing method as claimed in claim 1, further comprising:
a trial product commodity concept data inputting step of defining a plurality of commodity concepts for a trial product and inputting data pertaining to the plurality of commodity concepts for the trial product;
a trial product commodity concept data compiling step of compiling the trial product commodity concept data input by a plurality of individuals; and
a commodity concept information outputting step of outputting information pertaining to a consistency between information on the plurality of commodity concepts for the trial product that is based on the compiled trial product commodity concept data and the information on the weighted commodity concepts.

3. A commodity developing method for conducting commodity development based on commodity concept information that is gathered and analyzed using a computer, the method comprising:
a coordinate axis name and current product indicating step of defining and indicating two pairs of opposing commodity concepts represented by respective coordinate axes, which define a coordinate plane and are given coordinate axis names, and indicating a plurality of current products, wherein the opposing commodity concepts of each pair belong to a same category and are respectively assigned to opposing ends of the respective representative coordinate axis;
a coordinate plane data inputting step of inputting a coordinate point in the coordinate plane for each of the plurality of current products according to a recognition level of the commodity concepts;
a coordinate plane data compiling step of compiling coordinate plane data pertaining to the coordinate points input by a plurality of individuals; and
a commodity concept information outputting step of statistically processing the compiled coordinate plane data and outputting a coordinate plane diagram indicating a positioning of the plurality of current products based on the statistically processed coordinate plane data.

4. The commodity developing method as claimed in claim 3, further comprising:
a combined information outputting step of combining and indicating a positioning of information different from the plurality of current products on top of the coordinate plane diagram indicating the positioning of the plurality of current products in the coordinate plane defined by the coordinate axes representing the two pairs of opposing commodity concepts, and outputting the combined information.

5. A commodity developing method for conducting commodity development based on commodity concept information that is gathered and analyzed using a computer, the method comprising:
a commodity concept and current product indicating step of defining and indicating a plurality of commodity concepts and a plurality of current-products;
a commodity concept data inputting step of inputting data pertaining to whether each of the plurality of commodity concepts can be recognized in each of the plurality of current products;
a commodity concept data compiling step of compiling the commodity concept data pertaining to whether each of the plurality of commodity concepts can be recognized input by a plurality of individuals;
a weighting step of analyzing the compiled commodity concept data using a cluster analyzing method and weighting the plurality of commodity concepts for each of the plurality of current products based on the analyzed commodity concept data; and
a commodity concept information outputting step of outputting information on the weighted plurality of commodity concepts for each of the plurality of current products.

6. A commodity developing method for conducting commodity development based on commodity concept information that is gathered and analyzed using a computer, the method comprising:
a related commodity concept data inputting step of defining a commodity concept for a subjected commodity, distinguishing said commodity concept into a plurality of commodity concepts in association with directions respectively corresponding to a commodity quality, a commodity intermediate value, and a commodity satisfaction level, and inputting commodity concept data pertaining to the plurality of distinguished commodity concepts;
a commodity concept data compiling step of compiling the commodity concept data input by a plurality of individuals;
a commodity concept associating step of analyzing the compiled commodity concept data using a DEMATEL analyzing method, setting the commodity quality and the commodity satisfaction level at opposing ends of an axis, respectively, setting the commodity intermediate value at an intermediate point of the opposing ends of the axis, and developing the commodity concepts in association with the set axis based on the analyzed commodity concept data; and
a commodity concept information outputting step of outputting information on the associated commodity concepts as a commodity concept association diagram.

7. A commodity developing method for conducting commodity development based on commodity concept information that is gathered and analyzed using a computer, the method comprising:
a commodity concept data inputting step of defining a plurality of commodity concepts for a subjected commodity and inputting data pertaining to the plurality of commodity concepts;
a commodity concept data compiling step of compiling the commodity concept data input by a plurality of individuals;
a commodity concept weighting step of weighting the plurality of commodity concepts based on the compiled commodity concept data and respective input counts of the plurality of commodity concepts; and
a commodity concept information outputting step of outputting information on the weighted commodity concepts.

8. A commodity developing method for conducting commodity development based on commodity concept information that is gathered and analyzed using a computer, the method comprising:
a commodity concept data inputting step of defining a plurality of commodity concepts for a subjected commodity and inputting data pertaining to the plurality of commodity concepts;
a commodity concept data compiling step of compiling the commodity concept data input by a plurality of individuals; and
a commodity concept information outputting step of positioning words corresponding to the commodity concepts on a plane coordinates diagram based on the compiled commodity concept data and relevancy between the words, and outputting the positioning information as a commodity concept relevancy diagram.

9. A commodity developing method comprising a commodity concept evaluation step of re-evaluating a commodity concept by extracting a common ground between commodity concepts deciphered from at least two of the commodity developing methods as claimed in claims 1 through 8.

10. A commodity developing method for conducting commodity development based on commodity concept information that is gathered and analyzed using a computer, the method comprising:
a commodity concept data inputting method including an input template rendering step of displaying a plurality of input templates corresponding to a plurality of analyzing methods on a first computer, and an inputting step of selecting a predetermined input template from the plurality of input templates and inputting data pertaining to a plurality of commodity concepts.

11. A commodity developing method for conducting commodity development based on commodity concept information that is gathered and analyzed using a computer, the method comprising:
a commodity concept input data processing method including a commodity concept replacing step of replacing an input commodity concept with a commodity concept category by referring to a dictionary table collating a commodity concept and a commodity concept,category having an identical concept and commonality with the commodity concept.

12. A commodity developing system implementing a first computer for inputting commodity concept data pertaining to a collection of commodity concepts, and a second computer for receiving the commodity concept data via a line, analyzing the data, and outputting commodity concept information for commodity development, the system comprising:
input template rendering means for displaying on a first computer a plurality of input templates corresponding to a plurality of analyzing methods; and
input means for selecting a predetermined input template from the plurality of input templates and inputting the commodity concept data.

13. A commodity developing system implementing a first computer for inputting commodity concept data pertaining to a collection of commodity concepts, and a second computer for receiving the commodity concept data via a line, analyzing the data, and outputting commodity concept information for commodity development, the system comprising:
commodity concept replacing means for replacing an input commodity concept with a commodity concept category by referring to a dictionary table collating a commodity concept and a commodity concept category having an identical concept and commonality with the commodity concept; and
analyzing means for analyzing data pertaining to the commodity concept category.

14. A program for instructing a computer to perform:
a commodity concept data inputting step of defining a plurality of commodity concepts for each of. a current product and an ideal commodity and inputting data pertaining to the plurality of commodity concepts;
a commodity concept data compiling step of compiling the commodity concept data input by a plurality of individuals;
a commodity concept weighting step of obtaining a relation between the current product and the ideal commodity for each of the plurality of commodity concepts based on the complied commodity concept data, and weighting the commodity concepts based on the relation; and
a commodity concept information outputting step of outputting information on the weighted commodity concepts.

15. A program instructing a computer to perform:
a coordinate axis name and current product indicating step of defining and indicating two pairs of opposing commodity concepts represented by respective coordinate axes, which define a coordinate plane and are given coordinate axis names, and indicating a plurality of current products, wherein the opposing commodity concepts of each pair belong to a same category and are respectively assigned to opposing ends of the respective representative coordinate axis;
a coordinate plane data inputting step of inputting a coordinate point in the coordinate plane for each of the plurality of current products according to a recognition level of the commodity concepts;
a coordinate plane data compiling step of compiling coordinate plane data pertaining to the coordinate points input by a plurality of individuals; and
a commodity concept information outputting step of statistically processing the compiled coordinate plane data and outputting a. coordinate plane diagram indicating a positioning of the plurality of current products based on the statistically processed coordinate plane data.

16. A program for instructing a computer to perform:
a commodity concept and current product indicating step of defining and indicating a plurality of commodity concepts and a plurality of current products;
a commodity concept data inputting step of inputting data pertaining to whether each of the plurality of commodity concepts can be recognized in each of the plurality of current products;
a commodity concept data compiling step of compiling the commodity concept data pertaining to whether each of the plurality of commodity concepts can be recognized input by a plurality of individuals;
a weighting step of analyzing the compiled commodity concept data using a cluster analyzing method and weighting the plurality of commodity concepts for each of the plurality of current products based on the analyzed commodity concept-data; and
a commodity concept information outputting step of outputting information on the weighted plurality of commodity concepts for each of the plurality of current products.

17. A program instructing a computer to perform:
a related commodity concept data inputting step of defining a commodity concept for a subjected commodity, distinguishing said commodity concept into a plurality of commodity concepts in association with directions respectively corresponding to a commodity quality, a commodity intermediate value, and a commodity satisfaction level, and inputting commodity concept data pertaining to the plurality of distinguished commodity concepts;
a commodity concept data compiling step of compiling the commodity concept data input by a plurality of individuals;
a commodity concept associating step of analyzing the compiled commodity concept data using a DEMATEL analyzing method, setting the commodity quality and the commodity satisfaction level at opposing ends of an axis, respectively, setting the commodity intermediate value at an intermediate point of the opposing ends of the axis, and developing the commodity concepts in association with the set axis based on the analyzed commodity concept data; and
a commodity concept information outputting step of outputting information on the associated commodity concepts as a commodity concept association diagram.

18. A program for instructing a computer to perform:
a commodity concept data inputting step of defining a plurality of commodity concepts for a subjected commodity and inputting data pertaining to the plurality of commodity concepts;
a commodity concept data compiling step of compiling commodity concept data input by a plurality of individuals;
a commodity concept weighting step of weighting the plurality of commodity concepts based on the compiled commodity concept data and respective input counts of the plurality of commodity concepts; and
a commodity concept information outputting step of outputting information on the weighted commodity concepts.

19. A program for instructing a computer to perform:
a commodity concept data inputting step of defining a plurality of commodity concepts for a subjected commodity and inputting data pertaining to the plurality of commodity concepts;
a commodity concept data compiling step of compiling commodity concept data input by a plurality of individuals; and
a commodity concept information outputting step of positioning words corresponding to the commodity concepts on a plane coordinates diagram based on the compiled commodity concept data and relevancy between the words, and outputting the positioning information as a commodity concept relevancy diagram.

20. A program for conducting commodity development based on commodity concept information gathered and analyzed, the program instructing a computer to perform:
an input template rendering step of displaying on a first computer a plurality of input templates corresponding to a plurality of analyzing methods; and
an inputting step of selecting a predetermined input template from the plurality of input templates and inputting data pertaining to a plurality of commodity concepts.

21. A program for conducting commodity development based on commodity concept information gathered and analyzed, the program instructing a computer to perform:
a commodity concept replacing step of replacing an input commodity concept with a commodity concept category by referring to a dictionary table collating a commodity concept and a commodity concept category having an identical concept and commonality with the commodity concept; and
an analyzing step of analyzing data pertaining to the commodity concept category.

22. A computer readable recording medium recording a program for instructing a computer to perform:
a commodity concept data inputting step of defining a plurality of commodity concepts for each of a current product and an ideal commodity and inputting data pertaining to the plurality of commodity concepts;
a commodity concept data compiling step of compiling the commodity concept data input by a plurality of individuals;
a commodity concept weighting step of obtaining a relation between the current product and the ideal commodity for each of the plurality of commodity concepts based on the compiled commodity concept data, and weighting the commodity concepts based on the relation; and
a commodity concept information outputting step of outputting information on the weighted commodity concepts.

23. A computer readable recording medium recording a program for instructing a computer to perform:
a coordinate axis name and current product indicating step of defining and indicating two pairs of opposing commodity concepts represented by respective coordinate axes, which define a coordinate plane and are given coordinate axis names, and indicating a plurality of current products, wherein the opposing commodity concepts of each pair belong to a same category and are respectively assigned to opposing ends of the respective representative coordinate axis;
a coordinate plane data inputting step of inputting a coordinate point in the coordinate plane for each current product according to a recognition level of the commodity concepts;
a coordinate plane data compiling step of compiling coordinate plane data pertaining to the coordinate points input by a plurality of individuals; and
a commodity concept information outputting step of statistically processing the compiled coordinate plane data and outputting a coordinate plane diagram indicating a positioning of the plurality of current products based on the analyzed coordinate plane data.

24. A computer readable recording medium recording a program for instructing a computer to perform:
a commodity concept and current product indicating step of defining and indicating a plurality of commodity concepts and a plurality of current products;
a commodity concept data inputting step of inputting data pertaining to whether each of the plurality of commodity concepts can be recognized in each of the plurality of current products;
a commodity concept data compiling step of compiling the commodity concept data pertaining to whether each of the plurality commodity concepts can be recognized input by a plurality of individuals;
a weighting step of analyzing the compiled commodity concept data using a cluster analyzing method and weighting the plurality of commodity concepts for each of the plurality of current products based on the analyzed commodity concept data; and
a commodity concept information outputting step of outputting information on the weighted plurality of commodity concepts for each of the plurality of current products.

25. A computer readable recording medium recording a program for instructing a computer to perform:
a related commodity concept data inputting step of defining a commodity concept for a subjected commodity, distinguishing said commodity concept into a plurality of commodity concepts in association with directions respectively corresponding to a commodity quality, a commodity intermediate value, and a commodity satisfaction level, and inputting commodity concept data pertaining to the plurality of distinguished commodity concepts;
a commodity concept data compiling step of compiling the commodity concept data input by a plurality of individuals;
a commodity concept associating step of analyzing the compiled commodity concept data using a DEMATEL analyzing method, setting the commodity quality and the commodity satisfaction level at opposing ends of an axis, respectively, setting the commodity intermediate value at an intermediate point of the opposing ends of the axis, and developing the commodity concepts in association with the set axis based on the analyzed commodity concept data; and
a commodity concept information outputting step of outputting information on the associated commodity concepts as a commodity concept association diagram.

26. A computer readable recording medium recording a program for instructing a computer to perform:
a commodity concept data inputting step of defining a plurality of commodity concepts for a subjected commodity and inputting data pertaining to the plurality of commodity concepts;
a commodity concept data compiling step or compiling the commodity concept data input by a plurality of individuals;
a commodity concept weighting step of weighting the plurality of commodity concepts based on the compiled commodity concept data and respective input counts of the plurality of commodity concepts; and
a commodity concept information outputting step of outputting information on the weighted commodity concepts.

27. A computer readable recording medium recording a program for instructing a computer to perform:
a commodity concept data inputting step of defining a plurality of commodity concepts for a subjected commodity and inputting data pertaining to the plurality of commodity concepts;
a commodity concept data compiling step of compiling the commodity concept data input by a plurality of individuals; and
a commodity concept information outputting step of positioning words corresponding to the commodity concepts on a plane coordinates diagram based on the compiled commodity concept data and relevancy between the words, and outputting the positioning information as a commodity concept relevancy diagram.

28. A computer readable recording medium recording a program for conducting commodity development based on commodity concept information gathered and analyzed, the program instructing a computer to perform:
an input template rendering step of displaying on a first computer a plurality of input templates corresponding to a plurality of analyzing methods; and
an inputting step of selecting a predetermined input template from the plurality of input templates and inputting data pertaining to a plurality of commodity concepts.

29. A computer readable recording medium recording a program for conducting commodity development based on commodity concept information gathered and analyzed, the program instructing a computer to perform:
a commodity concept replacing step of replacing an input commodity concept with a commodity concept category by referring to a dictionary table collating a commodity concept and a commodity concept category having an identical concept and commonality with the commodity concept; and
an analyzing step of analyzing data pertaining to the commodity concept category.
